# EUROPÄISCHE PATENTSCHRIFT

(11) **EP 1 084 017 B1**
(45) Veröffentlichungstag und Bekanntmachung des Hinweises auf die Patenterteilung: **02.01.2003**
(21) Anmeldenummer: 98929419.4
(22) Anmeldetag: 04.06.1998
(51) Int. Cl.: B29C 45/13, B29C 45/16

(54) **VERFAHREN UND VORRICHTUNG ZUR HERSTELLUNG EINER ZAHNBÜRSTE**
METHOD AND DEVICE FOR PRODUCING A TOOTHBRUSH
PROCEDE ET DISPOSITIF POUR PRODUIRE UNE BROSSE A DENTS

(43) Veröffentlichungstag der Anmeldung: 21.03.2001
(73) Patentinhaber: M + C SCHIFFER GmbH, D-53577 Neustadt (DE)
(72) Erfinder: SCHIFFER, Carl, D-53577 Neustadt (DE)
(74) Vertreter: Grünecker, Kinkeldey, Stockmair & Schwanhäusser Anwaltssozietät
(86) Internationale Anmeldenummer: EP9803355
(87) Internationale Veröffentlichungsnummer: WO99062686

(56) Entgegenhaltungen:
- EP-A- 0 285 717
- DE-A- 4 423 145
- GB-A- 2 276 580
- PATENT ABSTRACTS OF JAPAN vol. 10, no. 83 (M-466), 2. April 1986 -& JP 60 224515 A (SANYO DENKI KK), 8. November 1985 & DATABASE WPI Section Ch, Week 8551 Derwent Publications Ltd., London, GB; Class A32, AN 85-320735
- PATENT ABSTRACTS OF JAPAN vol. 98, no. 5, 30. April 1998 & JP 10 006363 A (SUNSTAR INC), 13. Januar 1998
- PATENT ABSTRACTS OF JAPAN vol. 13, no. 223 (M-829), 24. Mai 1989 & JP 01 038217 A (NISSEI PLASTICS IND CO), 8. Februar 1989
- PATENT ABSTRACTS OF JAPAN vol. 14, no. 447 (M-1029), 25. September 1990 & JP 02 178012 A (NISSEI PLASTICS IND CO), 11. Juli 1990

## Beschreibung

Die vorliegende Erfindung betrifft ein Verfahren zur Herstellung von Zahnbürsten gemäß dem Oberbegriff von Anspruch. Die vorliegende Erfindung betrifft weiterhin eine Vorrichtung zur Herstellung von Zahnbürsten gemäß dem Oberbegriff von Anspruch 9.

Zur Erhöhung der Produktivität ist es bei der Herstellung von Zahnbürsten bekannt, mehrere Formnester identischer Ausformung gleichzeitig mit plastifizierter Masse zu füllen. Als gattungsbildend sowohl für das Verfahren und die Vorrichtung wird beispielsweise die EP-A-0 285 717 angesehen. Diese Druckschrift offenbart die Verwendung sogenannter Mehrfachwerkzeuge, bei denen in jedem Spritzgießzyklus mehrere, beispielsweise ein Griffteil und einen Bürstenkopf aufweisende Bauteile hergestellt werden, wodurch die Produktivität erhöht wird. Die Borstenbündel werden entweder mittels Umspritzen im Spritzgußwerkzeug mit dem Bürstenkopf verbunden, oder aber nach Ausformung des Bauteils in an dem Bürstenkopf ausgebildeten Bohrungen mit diesem in der sogenannten Ankertechnik verankert. Derart hergestellte Zahnbürsten werden üblicherweise bei gleichen technischen bzw. gestalterischen Merkmalen eines Zahnbürstentyps in unterschiedlichen Farben hergestellt. Für jeden Farbwechsel muß die vorherige Farbe zunächst vollständig aus dem Plastifizieraggregat und den Zuführkanälen zu den einzelnen Formnestern ausgefördert werden, wobei gleichzeitig in den Einzugsbereich des Plastifizieraggregates bereits die neue Farbkomponente eingefüllt wird. Ein Farbwechsel führt somit zu einem unerwünschten Ausschuß aufgrund einer farblichen Durchmischung der vorherigen Farbkomponente mit der nachfolgenden Farbkomponente.

Zahnbürsten werden heute üblicherweise vom Hersteller in verkaufsfertiger Form abgegeben. Dabei wird gefordert, daß Zahnbürsten gleichen Typs, jedoch unterschiedlicher Farbgebung oder aber mit voneinander abweichenden Steifigkeitseigenschaften der Borstenbündel zur Anpassung an die individuellen Anforderungen der Benutzer, in kleinen Verpackungseinheiten zusammengefaßt sind. Diese kleinen Verpackungseinheiten müssen dann lediglich aus einer Kartonverpackung im Einzelhandel entnommen werden, um sämtliche Varianten eines Zahnbürstentyps dem Kunden anbieten zu können.

Aufgrund des Erfordernisses der verkaufsfertigen Konfektionierung werden bei der Herstellung der Zahnbürsten eines Typs mit unterschiedlichen Varianten, beispielsweise unterschiedlicher Farbgebung, zunächst sämtliche Zahnbürsten einer Farbe mittels Spritzguß hergestellt und gelagert. Danach werden sequentiell unter Inkaufnahme der oben beschriebenen Nachteile bei einem Farbwechsel die weiteren farblichen Gestaltungen des Zahnbürstentyps hergestellt und ebenfalls gelagert, bis die letzte Farbvariante mittels Spritzguß hergestellt worden ist. Bei der Anwendung der konventionellen Ankertechnik erfolgt die Beborstung, also das Anbringen von Borstenbündeln an dem aus Griffteil und Bürstenkopf gebildeten Bauteil, erst nach Fertigstellung sämtlicher Farbvarianten. Die derart fertiggestellten Zahnbürsten unterschiedlicher Farbvarianten werden schließlich zu den von den Abnehmern gewünschten kleinen Verpackungseinheiten mit sämtlichen Farbvarianten zusammengefaßt und verkaufsfertig verpackt.

Das vorbeschriebene Verfahren weist den Nachteil auf, daß eine erhebliche Anzahl von Zahnbürsten zwischengelagert werden muß, um schließlich sämtliche Varianten verkaufsfertig verpacken zu können. Dadurch verlängern sich die Herstellungszeiten zur Erstellung von verkaufsfertigen Verpackungseinheiten. Darüber hinaus werden die Bauteile unterschiedlicher Farbgebung als Massenware gelagert, so daß sie zur Beborstung bzw. zur verkaufsfertigen Verpackung erneut einzeln gegriffen, in ihrer Lage erkannt und ausgerichet werden müssen, um die Bauteile in definierter Weise der Beborstungseinrichtung bzw. der Verpackungseinrichtung zuzuführen. Dies erfordert zusätzliche Bearbeitungsschritte, die kostspielig sind. Darüber hinaus ist auch die Lagerung einer erheblichen Anzahl von Bauteilen ohne Borsten oder gar von fertigen Zahnbürsten kapitalintensiv.

Zur Herstellung von Spielzeugketten aus Kunststoff ist es bekannt, in einem Spritzgießwerkzeug mehrere unterschiedlich gestaltete Kavitäten auszubilden, wobei Kavitäten einer spezifischen Geometrie jeweils mit einer Spritzgießeinrichtung verbunden sind. Vor dem Spritzgießzyklus wird in die Spritzgußform ein Band eingelegt, welches sämtliche Kavitäten durchzieht. Beim Einspritzen von Kunststoffen unterschiedlicher Farbe werden die hierbei gebildeten Formkörper ausgebildet und umfließen dabei das Band. Bei diesem Verfahren wird bei einem Spritzgießzyklus ein einziges einheitliches Produkt bestehend aus dem Band und mehreren spritzgegossenen Kunststoffkörpern hergestellt.

Der vorliegenden Erfindung liegt die Aufgabe zugrunde, ein Verfahren und eine Vorrichtung zur Herstellung von Zahnbürsten der eingangs genannten Art bereitzustellen, durch die Varianten von Zahnbürsten eines Typs effektiv und kostengünstig zur verkaufsfertigen Verpackung vorbereitet werden können.

Bezüglich des Verfahrens wird die obige Aufgabe gelöst durch ein Verfahren zur Herstellung einer Zahnbürste der eingangs genannten Art, daß dadurch gekennzeichnet ist, daß unterschiedliche Komponenten der plastifizierten Masse über separate, voneinander getrennte Kanäle einzelnen Formnestem zugeführt werden.

Durch das erfindungsgemäße Verfahren ist es möglich, Zahnbürsten eines Typs, also mit identischer Bauteilgeometrie, jedoch unterschiedlichen Komponenten, die beispielsweise sich bezüglich der Farbgebung oder aber der elastischen Eigenschaften unterscheiden können, in einem einzigen Werkzeug herzustellen. Das erfindungsgemäße Verfahren ermöglicht somit die gleichzeitige Herstellung von einer Vielzahl von geometrisch identisch ausgestalteten Zahnbürsten und bietet demnach die Vorteile eines Mehrfachwerkzeuges. Da jedoch unterschiedliche Komponenten der plastifizierten Masse über separate, voneinander getrennte Kanäle einzelnen Formnestern zugeführt werden, erfolgt die gleichzeitige Herstellung von unterschiedlichen Varianten eines Zahnbürstentyps. Zahnbürstenvarianten eines Zahnbürstentyps können somit gemäß den Erfordernissen an eine verkaufsfertige Verpackung simultan in dem Werkzeug hergestellt werden, so daß auf eine nachteilige zeit- und kostenintensive Zwischenlagerung von einzelnen Varianten eines Zahnbürstentyps verzichtet werden kann. Mit dem erfindungsgemäßen Verfahren ist es beispielsweise möglich, sämtliche Varianten eines Zahnbürstentyps gleichzeitig in einem einzigen Werkzeug herzustellen. Die mit dem erfindungsgemäßen Verfahren hergestellten Varianten eines Zahnbürstentyps können mit einem Handhabungsgerät direkt aus dem Werkzeug entnommen und in definierter Lage einer Beborstung bzw. einer Verpackung in verkaufsfertigen Einheiten zugeführt werden. Eine gesonderte Handhabung, Erkennung und Ausrichtung von als Massenware zwischengelagerten fertigen Zahnbürsten bzw. unbeborsteten Bauteilen kann somit entfallen. Mit dem erfindungsgemäßen Verfahren lassen sich somit effektiv und kostengünstig Varianten von Zahnbürsten zur verkaufsfertigen Verpackung derselben vorbereiten.

Gemäß einer bevorzugten Ausgestaltung der vorliegenden Erfindung wird die plastifizierte Masse in den Kanälen flüssig gehalten. Durch eine derartige Maßnahme kann die gesamte in dem Plastifizieraggregat der Spritzgußmaschine plastifizierte Masse zur Ausbildung der Zahnbürsten-Spritzgußbauteile verwendet werden.

Gemäß einer weiteren bevorzugten Ausgestaltung der vorliegenden Erfindung werden mehrere Bauteile durch eine Komponente ausgeformt. Dadurch wird ein Verfahren zur Herstellung einer Zahnbürste mit erhöhter Produktivität geschaffen. Zu jeder Variante eines Zahnbürstentyps sind mehrere identische Formnester ausgebildet, die durch eine bestimmte Komponente der plastifizierten Masse zur Ausformung des Zahnbürsten-Bauteils ausgefüllt werden.

Gemäß einer weiteren bevorzugten Ausgestaltung der vorliegenden Erfindung werden in einem ersten Formschritt mehrere Grundkörper in einem gemeinsamen Werkzeug ausgeformt und in einem zweiten Formschritt die Grundkörper umspritzt. Dadurch lassen sich hochwertige Zahnbürsten herstellen. Verschiedene Komponenten, die sich hinsichtlich der Materialeigenschaften unterscheiden, können zur Ausformung bestimmter Funktionsbereiche an dem Bauteil eingesetzt werden. So können beispielsweise an dem Griffteil über eine weichelastische Komponente die Außenfläche des Griffteiles bildende Auflagen für die Hand des Benutzers vorgesehen sein. Darüber hinaus können die elastischen Eigenschaften eines zwischen Bürstenkopf und Griffteil ausgebildeten Halsbereiches nicht nur durch die geometrische Ausgestaltung, sondern auch beispielsweise durch die Wahl der zu umspritzenden Komponente beeinflußt werden. Schließlich kann die zu umspritzende Komponente die gleichen Werkstoffeigenschaften wie die in dem ersten Formschritt verwendete Komponente aufweisen und lediglich zur weiteren farbigen Gestaltung des Zahnbürstenbauteils umspritzt werden.

Grundsätzlich sollte betont werden, daß unterschiedliche "Komponenten" sich bei ansonsten gleichen Materialeigenschaften lediglich hinsichtlich ihrer Farbgebung unterscheiden können. Selbstverständlich können unterschiedliche "Komponenten" im Sinne der vorliegenden Erfindung auch Materialien mit unterschiedlichen physikalischen Eigenschaften, wie beispielsweise Härte, Elastizität, Haftungseigenschaften und dergleichen sein. Unterschiedliche "Komponenten" im Sinne der Erfindung können sich aber auch sowohl hinsichtlich der Farbe als auch hinsichtlich der physikalischen Eigenschaften unterscheiden.

Gemäß einer weiteren bevorzugten Ausgestaltung der vorliegenden Erfindung werden die unterschiedlichen Komponenten der plastifizierten Masse in dem zweiten Formschritt zugeführt. Sofern dabei in dem ersten Formschritt für sämtliche Formnester dieselbe Komponente verwendet wird, ergibt sich ein identischer Grundkörper für sämtliche Varianten eines Zahnbürstentyps bei voneinander abweichenden Umspritzungen, die beispielsweise zur Ausbildung von farbigen Griffflächen vorgesehen sein können.

Gemäß einer besonderen bevorzugten Weiterbildung der vorliegenden Erfindung werden auch in dem ersten Formschritt unterschiedliche Komponenten plastifizierter Masse über separate, voneinander getrennte Kanäle den Formnestern zur Ausformung der Grundkörper zugeführt, so daß sich eine sehr hohe Variationsmöglichkeit für Zahnbürsten desselben Zahnbürstentyps ergibt.

Ein besonders wirtschaftlich durchzuführendes Verfahren wird gemäß einer weiteren bevorzugten Ausgestaltung der vorliegenden Erfindung dadurch geschaffen, daß der erste und der zweite Formschritt in demselben Werkzeug durchgeführt werden. Dadurch entfallen größere Transportwege des in dem ersten Formschritt ausgebildeten Grundkörpers zur Umspritzung desselben.

Das vorliegende erfindungsgemäße Verfahren ist nicht auf die Durchführung von lediglich zwei aufeinanderfolgenden Formschritten beschränkt. Es können auch drei oder mehrere aufeinanderfolgende Formschritte durchgeführt werden, wobei selbstverständlich auch in diesen Formschritten unterschiedliche Komponenten in separaten, voneinander getrennten Formnestem zur Anwendung kommen können. Dadurch ergeben sich eine Vielzahl von Gestaltungsmöglichkeiten zur Ausbildung von unterschiedlichen Varianten eines Zahnbürstentyps. So können beispielsweise vier, in einem ersten Formschritt identisch ausgeformte Grundkörper in einem zweiten Formschritt mit jeweils einer Farbkomponente umspritzt werden. Es ergeben sich somit vier Bauteile mit identisch eingefärbtem Grundkörper und jeweils vier unterschiedlichen Umspritzungen. In einem nachfolgenden Formschritt können diese vier Bauteile beispielsweise in weiteren Formnestern, von denen jeweils zwei Formnester einem Plazifizierungsaggregat zugeordnet sind, nochmals umspritzt werden, um dann als fertige Drei-Komponenten-Spritzgußbauteile einer verkaufsfertigen Verpackung zugeführt zu werden.

Gemäß einer weiteren bevorzugten Ausgestaltung der vorliegenden Erfindung werden zumindest einige der Borstenbündel in dem zweiten Formschritt durch Umspritzen der Borstenbündel und/oder eines, insbesondere in dem ersten Formschritt an dem Borstenbündel ausgebildeten Borstenbündelhaltebereiches mit dem Grundkörper verbunden. Bei einer derartigen Ausgestaltung werden die Steifigkeitseigenschaften der mittels Umspritzen mit dem Grundkörper verbundenenen Borstenbündel durch die physikalischen Eigenschaften des in dem zweiten Formschritt umspritzten Werkstoffs beeinflußt. Zahnbürsten eines Zahnbürstentyps, jedoch mit unterschiedlichen Steifigkeitseigenschaften, lassen sich somit wirkungsvoll und kostengünstig zur verkaufsfertigen Verpackung vorbereiten, indem Komponenten mit unterschiedlichen physikalischen Eigenschaften in dem zweiten Formschritt zur Umspritzung in einzelnen Formnestern verwendet werden, sofern nicht sämtliche Borstenbündel in dem zweiten Formschritt durch Umspritzen mit dem Grundkörper verbunden werden, können die übrigen Borstenbündel beispielsweise in einem nachfolgenen, dritten oder vierten Formschritt oder aber konventionell durch Verankern im Anschluß an die Formgebung mit dem Grundkörper verbunden werden.

Bezüglich der Vorrichtung wird die oben genannte Aufgabe durch eine Vorrichtung zur Herstellung einer Zahnbürste der eingangs genannten Art mit einem Spritzgießwerkzeug, in dem mehrere identische Formnester ausgebildet sind, gelöst, die dadurch gekennzeichnet ist, daß einzelnen Formnestern unterschiedliche Plastifizieraggregate zugeordnet sind. In den unterschiedlichen Plastifizieraggregaten werden die Komponenten zur Ausformung verschiedener Varianten eines Zahnbürstentyps plastifiziert und über separate, den jeweiligen Formnestern zugeordnete Kanäle in diese eingespritzt, so daß mit der erfindungsgemäßen Vorrichtung Varianten eines Zahnbürstentyps wirkungsvoll und kostengünstig zur verkaufsfertigen Verpackung vorbereitet werden können.

Weitere Einzelheiten, Vorteile und Merkmale der vorliegenden Erfindung ergeben sich aus der nachfolgenden Beschreibung der Zeichnung. In dieser zeigen:
- Fig. 1: eine schematische Ansicht eines Werkzeugs eines Ausführungsbeispiels der erfindungsgemäßen Vorrichtung;
- Fig. 2: eine schematische Ansicht eines weiteren Werkzeugs einer bevorzugten Ausführungsform der vorliegenden Erfindung;
- Fig. 3: den oberen Teil des in Fig.2 gezeigten Werkzeugs in einer ersten Ventilstellung, und
- Fig. 4: die in Fig. 3 dargestellte Ansicht einer zweiten Ventilstellung.

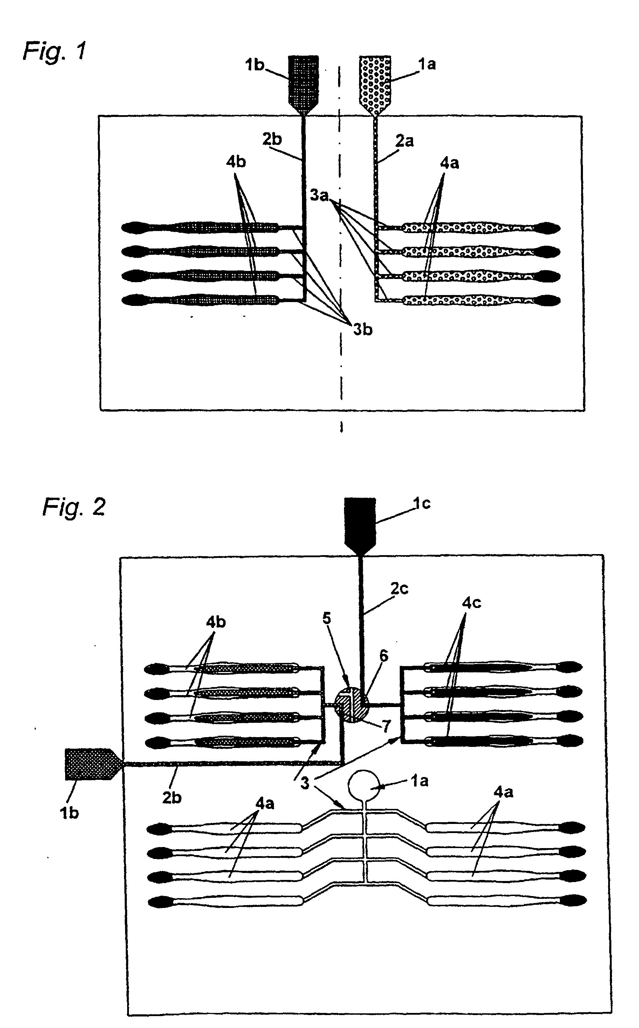

Das in Fig.1 gezeigte Gießwerkzeug ist Bestandteil eines Ausführungsbeispiels einer Vorrichtung zur Herstellung von Zahnbürsten. Neben dem in Fig. 1 gezeigten Werkzeug umfaßt die Vorrichtung mehrere Plastifizieraggregate 1, die in Fig.1 lediglich schematisch angedeutet sind. Die jeweiligen Düsen der Plastifizieraggregate 1a, 1b kommunizieren über Angüsse 2 und Verteilerkanäle 3 mit Formnestern 4. in dem in Fig.1 gezeigten Ausführungsbeispiel sind in dem Werkzeug acht identische Formnester ausgebildet, wobei diese acht Formnester 4 zu zwei Gruppen von jeweils vier Formnestern 4a; 4b zusammengefaßt sind. Die eine Gruppe von ersten Formnestern 4a kommuniziert mit über die Verteilerkanäle 3a und den Anguß 2a mit dem entsprechenden Plastifizieraggregat 1a, wohingegen die Gruppe von zweiten Formnestern 4b über die Strömungskanäle 2b, 3b mit dem entsprechenden Plastifizieraggregat 1b verbunden sind.

in den jeweiligen Plastifizieraggregaten 1a, 1b werden unterschiedliche Komponenten plastifizierter Masse vorbereitet. Im vorliegenden Fall unterscheiden sich die unterschiedlichen Komponenten hinsichtlich der Farbe. Bei jedem Spritzgußzyklus werden somit vier aus einem Griffteil und einem Bürstenkopf bestehende Bürstenkörper einer ersten Farbe und vier weitere Bürstenkörper einer zweiten Farbe hergestellt. Dabei kann die Beborstung der Bürstenkörper auf zweierlei Weise bewirkt werden: Einerseits können Borstenbündel in die Spritzgußform vor dem Formfüllvorgang eingesetzt und durch Umspritzen mit dem Bürstenkörper verbunden werden. Alternativ kann auch der Ausnehmungen für das Einsetzen von Borstenbündeln aufweisende Bürstenkörper in einem nachfolgenden Beborstungschritt mit Borstenbündeln versehen werden.

In Fig.2 ist ein weiteres Ausführungsbeispiel eines Werkzeugs gezeigt. Dieses Werkzeug ist ein Achtfach-Werkzeug für den Mehrkomponentenspritzguß. Das Werkzeug weist acht erste Formnester 4a auf, die über Verteilerkanäle 3a und einen Anguß mit einem ersten, schematisch angedeuteten Plastifizieraggregat 1a verbunden sind. Diese ersten Formnester 4a sind kleiner als zweite Formnester 4b; 4c deren Verteilerkanäle 3 an einem Ventilkörper 5 enden. Der in der Draufsicht kreisförmige Ventilkörper 5 weist zwei abgewinkelte Strömungskanäle 6, 7 auf, die punktsymmetrisch zu dem Mittelpunkt des Ventilkörpers 5 angeordnet sind. Weiterhin weist der Ventilkörper einen T-förmigen Verteiler 8 auf.

In der in Fig.2 gezeigten Stellung kommunizieren die winkelförmigen Strömungskanäle 6, 7 über Angüsse 2 mit Plastifizieraggregaten 1b, 1c. Jedes der Plastifizieraggregate 1b, 1c kommuniziert dementsprechend mit vier Formnesten 4b, 4c.

Bei jedem Spritzgußzyklus werden sämtliche Formnester 4a, 4b, 4c mit Formmasse gefüllt. Dabei werden in den Formnestem 4a acht identische Grundkörper aus einer identischen Werkstoffkomponente ausgeformt. Beim Öffnen des Werkzeugs werden diese acht Grundkörper in die zwischenzeitlich entformten Formnester 4b, 4c eingesetzt. Diese Formnester 4b, 4c sind identisch zueinander, jedoch größer als die Formnester 4a ausgebildet. Das Werkzeug wird geschlossen und es beginnt ein neuer Spritzgußzyklus, bei dem erneut acht Grundkörper der ersten Werkstoffkomponente ausgeformt werden und außerdem jeweils vier der in dem ersten Formnest 4a ausgeformten Grundkörper in den Formnestern 4b, 4c mit unterschiedlichen Komponenten umspritzt werden. So können beispielsweise die in den Formnestern 4b aufgenommenen Grundkörper mit einer ersten Farbe umspritzt werden, die in dem Plastifizieraggregat 1b aufbereitet wird, wohingegen die in den Formnestern 4c aufgenommenen vier Grundkörpern in demselben Spritzgußzyklus mit einer davon abweichenden Komponente umspritzt werden, die in dem Plastifizieraggregat 1c aufbereitet wird. Demnach ist es mit dem in Fig.2 gezeigten Ausführungsbetspiel eines Werkzeugs möglich, gleichzeitig in einem Spritzgußzyklus 8 Zahnbürsten eines Typs, also identischer Geometrie herzustellen, von denen jeweils vier Zahnbürsten identisch sind. Die derart hergestellten zwei Varianten von Zahnbürsten können mit einer Handhabungsvorrichtung unmittelbar einer Beborstungseinrichtung zugeführt werden oder aber, sofern die Borstenbündel durch Umspritzen mit dem Bürstenkörper verankert worden sind, in einer Verpackungseinrichtung unmittelbar gebrauchsfertig verpackt werden. Bei dem gezeigten Ausführungsbeispiel werden bei einer gebrauchsfertigen Verpakkung zwei unterschiedliche Varianten eines Zahnbürstentyps zu kleinen Verpakkungseinheiten zusammengefaßt, die im Einzelhandel lediglich entnommen werden müssen, um sämtliche Varianten eines Zahnbürstentyps dem Kunden anbieten zu können. Da mehrere Varianten eines Zahnbürstentyps gleichzeitig in dem Spritzgußwerkzeug hergestellt werden, entfallen die im Stand der Technik erforderlichen Schritte zum Vorbereiten und Zusammenfassen von unterschiedlichen Varianten eines Zahnbürstentyps.

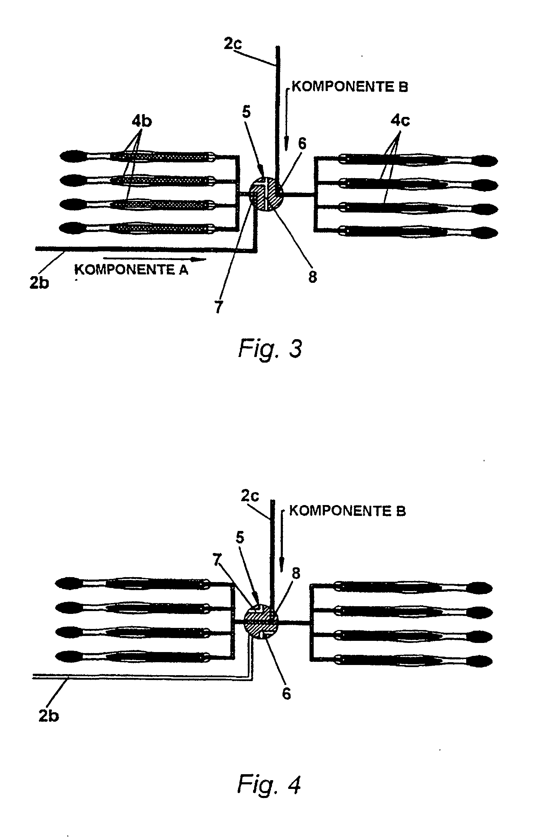

In den Fig.3 und 4 sind unterschiedliche Gebrauchsstellungen des Ventilkörpers 5 gezeigt. Die in Fig.3 gezeigte Gebrauchsstellung des Ventilkörpers 5 entspricht der in Fig.2 gezeigten Stellung, bei der jeweils ein Plastifizieraggregat 1b; 1c mit vier Formnestern 4b; 4c kommuniziert. Durch Drehen des Ventilkörpers 5 um 90° im Uhrzeigersinn wird der T-förmige Verteiler 8 mit dem Anguß 2c in Verbindung gebracht. Dementsprechend werden sämtliche acht Grundkörper durch die in dem Plastifizieraggregat 1c vorbereitete Komponente umspritzt. Dieser Zustand ist in Fig.4 gezeigt. In dieser Stellung ist der Anguß 2b gesperrt. Wird der Ventilkörper von der in Fig.4 gezeigten Stellung um 180° gedreht, erfolgt eine Umspritzung der Grundkörper durch die in dem Plastifizieraggregat 1b aufbereitete Masse bei gesperrtem Anguß 2c.

Statt des Ventils kann eine beliebige Absperreinrichtung vorgesehen sein, die beispielsweise auch durch einen Stopfen oder einen Schieber gebildet sein kann. Die Absperreinrichtung kann dabei mechanisch, elektrisch, pneumatisch oder hydraulisch betätigt werden. Bei einer besonders einfachen Ausgestaltung ist lediglich ein Werkzeugeinsatz vorgesehen, der für den Komponentenwechsel ausgetauscht wird.

Bei der Verwendung eines Ventilkörpers 5, wie in er in den Fig. 2 bis 4 gezeigt ist, ist es auf einfache Weise möglich, den Ausstoß von unterschiedlichen Varianten von Zahnbürsten eines Typs zu verändern. So können wahlweise zwei unterschiedliche Varianten mit unterschiedlichen Farben der zweiten umspritzten Komponente hergestellt werden (Fig.3). Wird lediglich die Herstellung einer Variante gewünscht, so wird der Ventilkörper 5 in die in Fig.4 gezeigte Gebrauchsstellung gedreht, oder in eine um diese um 180° gedrehte Gebrauchsstellung. Für einen Wechsel der Komponente, beispielsweise für einen Farbwechsel oder aber einen werkstofflichen Wechsel der zweiten Komponente ist es nicht erforderlich, die in einem Plastifizieraggregat bereits aufbereitete Masse zunächst auszufördern und eine neue Komponente in diesem Plastifizieraggregat vorzubereiten. Ein Farbwechsel läßt sich lediglich durch Drehen des Ventilkörpers bewerkstelligen. Da bei dem gezeigten Werkzeug Heißkanäle verwendet werden, bleibt die Masse auch dann in dem Werkzeug fließfähig, wenn sie über das jeweilige Plastifizieraggregat lediglich angeboten, jedoch nicht eingespritzt wird.

Selbstverständlich läßt sich der in Fig. 4 gezeigte Ventilkörper beliebig variieren, um beispielsweise die plastifizierte Masse von mehr als drei Plastifizieraggregaten wahlweise jeweiligen Formnestern zuzuführen. Ein Ventil kann beispielsweise auch bei einem Spritzgußwerkzeug vorgesehen sein, bei dem lediglich eine Komponente verarbeitet wird (vgl.Fig.1).

### Bezugszeichenliste

- 1: Plastifizieraggregat
- 2: Anguß
- 3: Verteilerkanal
- 4: Formnester
- 5: Ventilkörper
- 6, 7: Strömungskanäle
- 8: T-Verteiler

## Patentansprüche

1. Verfahren zur Herstellung einer einen Griffteil und einen eine Mehrzahl von Borstenbündeln umfassenden Bürstenkopf aufweisenden Zahnbürste, bei dem plastifizierte Masse zur Ausformung identischer, separater Formkörper in mehrere, in einem gemeinsamen Werkzeug ausgebildete separate Formnester (4) eingespritzt wird,
**dadurch gekennzeichnet,**
**dass** die einzelnen Formnester (4) mit unterschiedlichen Komponenten plastifizierter Masse in einem Spritzgießzyklus gefüllt werden und dass die unterschiedlichen Komponenten der plastifizierten Masse über voneinander getrennte Kanäle (2a; 3a; 2b; 3b) den separaten Formnestern (4a; 4b) zugeführt werden.

2. Verfahren nach Anspruch 1, **dadurch gekennzeichnet, dass** die plastifizierte Masse in den Kanälen (2, 3) flüssig gehalten wird.

3. Verfahren nach Anspruch 1 oder 2, **dadurch gekennzeichnet, dass** eine Komponente (A, B) in mehrere Formnester (4a; 4b) eingespritzt wird.

4. Verfahren nach zumindest einem der vorherigen Ansprüche, **dadurch gekennzeichnet, daß** in einem ersten Formschritt mehrere Grundkörper in einem gemeinsamen Werkzeug ausgeformt werden, und daß in einem zweiten Formschritt die Grundkörper umspritzt werden.

5. Verfahren nach Anspruch 4, **dadurch gekennzeichnet, daß** die unterschiedlichen Komponenten der plastifizierten Masse in dem zweiten Formschritt zugeführt werden.

6. Verfahren nach Anspruch 4 oder 5, **dadurch gekennzeichnet, dass** in dem ersten Formschritt unterschiedliche Komponenten (A, B) plastifizierter Masse über separate, voneinander getrennte Kanäle (2a; 2b) den Formnestern (4a; 4b) zur Ausformung der Grundkörper zugeführt werden.

7. Verfahren nach zumindest einem der Ansprüche 4 bis 6, **dadurch gekennzeichnet, daß** der erste und der zweite Formschritt in demselben Werkzeug durchgeführt werden.

8. Verfahren nach zumindest einem der Ansprüche 4 bis 7, **dadurch gekennzeichnet, daß** zumindest einige der Borstenbündel in dem zweiten Formschritt durch Umspritzen der Borstenbündel und/oder eines, insbesondere in dem ersten Formschritt an dem Borstenbündel ausgebildeten Borstenbündelhaltebereiches mit dem Grundkörper verbunden werden.

9. Vorrichtung zur Herstellung einer einen Griffteil und einen eine Mehrzahl von Borstenbündeln umfassenden Bürstenkopf aufweisenden Zahnbürste, insbesondere nach zumindest einem der Ansprüche 1 bis 8, mit einem Spritzgießwerkzeug, in dem mehrere identische Formnester (4) ausgebildet sind,
**dadurch gekennzeichnet,**
**dass** mehrere Plastifizieraggregate (1a; 1b; 1c) vorgesehen sind, die jeweils mit unterschiedlichen Formnestern des Spritzgießwerkzeuges (4a; 4b) kommunizieren.

10. Vorrichtung nach Anspruch 9, **dadurch gekennzeichnet, daß** mehrere erste Formnester (4a) zur Ausformung von Grundkörpem identischer Geometrie sowie eine den ersten Formnestern entsprechende Anzahl an zweiten Formnestern (4b; 4c) vorgesehen sind, die größer als die ersten Formnester (4a) ausgebildet sind.

11. Vorrichtung nach Anspruch 9 oder 10, **dadurch gekennzeichnet, daß** einzelnen der zweiten Formnester (4b; 4c) unterschiedliche Plastifizieraggregate (1b; 1c) zugeordnet sind.

12. Vorrichtung nach zumindest einem der Ansprüche 9 bis 11, **dadurch gekennzeichnet, daß** mindestens eine Absperreinrichtung (5) vorgesehen ist, durch einzelne oder mehrere Formnester (4a; 4b) mit einen Plastifizieraggregat (1a; 1b) in Strömungsverbindung bringbar sind.

13. Vorrichtung nach Anspruch 12, **dadurch gekennzeichnet, daß** durch die Absperreinrichtung (5) verschiedene Formnester wahlweise mit unterschiedlichen Plastifizieraggregaten (1b; 1c) oder mit einem gemeinsamen Plastifizieraggregat (1a; 1b) in Strömungsverbindung bringbar sind.

14. Vorrichtung nach Anspruch 12 oder 13, **dadurch gekennzeichnet, daß** eine Absperreinrichtung (5) Formnestern identischer Ausgestaltung zugeordnet ist.

## Revendications

1. Procédé pour fabriquer une brosse à dents comportant une poignée et une tête de brosse comprenant plusieurs faisceaux de poils, selon lequel une masse plastifiée est injectée dans plusieurs cavités de moule distinctes (4) prévues dans un moule commun, pour former des corps moulés distincts identiques,
**caractérisé en ce que** les cavités de moule individuelles (4) sont remplies, pendant un cycle de moulage par injection, de différents composants d'une masse plastifiée, et **en ce que** les différents composants de la masse plastifiée sont amenés dans les cavités distinctes (4a ; 4b) par l'intermédiaire de conduits (2a ; 3a ; 2b ; 3b) séparés les uns des autres.

2. Procédé selon la revendication 1, **caractérisé en ce que** la masse plastifiée est maintenue fluide dans les conduits (2, 3).

3. Procédé selon la revendication 1 ou 2, **caractérisé en ce qu'**un composant (A, B) est injecté dans plusieurs cavités de moule (4a ; 4b).

4. Procédé selon l'une au moins des revendications précédentes, **caractérisé en ce que** lors d'une première phase de moulage, plusieurs corps de base sont formés dans un moule commun, et **en ce que** lors d'une seconde phase de moulage, les corps de base sont enrobés par injection.

5. Procédé selon la revendication 4, **caractérisé en ce que** les différents composants de la masse plastifiée sont amenés lors de la seconde phase de moulage.

6. Procédé selon la revendication 4 ou 5, **caractérisé en ce que** lors de la première phase de moulage, des composants différents (A, B) d'une masse plastifiée sont amenés par l'intermédiaire de conduits distincts et séparés (2a ; 2b) dans les cavités de moule (4a ; 4b) pour former les corps de base.

7. Procédé selon l'une au moins des revendications 4 à 6, **caractérisé en ce que** la première et la seconde phase de moulage sont exécutées dans le même moule.

8. Procédé selon l'une au moins des revendications 4 à 7, **caractérisé en ce que** quelques-uns au moins des faisceaux de poils sont reliés au corps de base, lors de la seconde phase de moulage, par enrobage par injection desdits faisceaux de poils et/ou d'une zone de fixation de faisceaux de poils formée en particulier lors de la première phase de moulage sur le faisceau de poils.

9. Dispositif pour fabriquer une brosse à dents comportant une poignée et une tête de brosse comprenant plusieurs faisceaux de poils, en particulier selon l'une au moins des revendications 1 à 8, avec un moule à injection dans lequel sont formées plusieurs cavités de moule identiques (4),
**caractérisé en ce qu'**il est prévu plusieurs unités de plastification (1a ; 1b ; 1c) qui communiquent avec différentes cavités du moule à injection (4a ; 4b).

10. Dispositif selon la revendication 9, **caractérisé en ce qu'**il est prévu plusieurs premières cavités de moule (4a) pour former des corps de base de géométrie identique, et un nombre, correspondant aux premières cavités, de secondes cavités de moule (4b ; 4c) qui sont plus grandes que les premières.

11. Dispositif selon la revendication 9 ou 10, **caractérisé en ce que** des unités de plastification différentes (1b ; 1c) sont associées aux secondes cavités de moule individuelles (4b ; 4c).

12. Dispositif selon l'une au moins des revendications 9 à 11, **caractérisé en ce qu'**il est prévu au moins un dispositif d'arrêt (5) grâce auquel des cavités (4a ; 4b) individuelles ou plusieurs cavités (4a ; 4b) peuvent être mises en relation d'écoulement avec une unité de plastification (1a ; 1b).

13. Dispositif selon la revendication 12, **caractérisé en ce que** grâce au dispositif d'arrêt (5), différentes cavités de moule peuvent sélectivement être mises en relation d'écoulement avec des unités de plastification différentes (1b ; 1c) ou avec une unité de plastification commune (1a ; 1b).

14. Dispositif selon la revendication 12 ou 13, **caractérisé en ce qu'**un dispositif d'arrêt (5) est associé à des cavités de moule de forme identique.

## Claims

1. A method for producing a toothbrush comprising a handle part and a brush head including a plurality of tufts of bristles, wherein plastified material is injected into a plurality of separate mold cavities (4) configured in a joint tool for shaping identical, separated molded bodies,
**characterized in**
**that** the individual mold cavities (4) are filled with different components of a plastified material in one injection molding cycle, and that the different components of the plastified material are supplied via separated channels (2a; 3a; 2b; 3b) to the separate mold cavities (4a; 4b).

2. The method according to claim 1, **characterized in that** the plastified material is kept in a liquid state in the channels (2, 3).

3. The method according to claim 1 or 2, **characterized in that** one component (A, B) is injected into a plurality of mold cavities (4a; 4b).

4. The method according to at least one of the preceding claims, **characterized in that** a plurality of basic bodies are shaped in a joint tool in a first molding step, and that the basic bodies are over-molded in a second molding step.

5. The method according to claim 4, **characterized in that** the different components of the plastified material are supplied in the second molding step.

6. The method according to claim 4 or 5, **characterized in that** in the first molding step different components (A, B) of plastified material are supplied via separate channels (2a; 2b) to the mold cavities (4a; 4b) for shaping the basic bodies.

7. The method according to at least one of claims 4 to 6, **characterized in that** the first and second molding steps are carried out in the same tool.

8. The method according to at least one of claims 4 to 7, **characterized in that** at least some of the tufts of bristles are connected in the second molding step to the basic body by over-molding the tufts of bristles and/or a bristle tuft holding portion formed, in particular, in the first molding step on the tuft of bristles.

9. A device for producing a toothbrush comprising a handle part and a brush head including a plurality of tufts of bristles, in particular according to at least one of claims 1 to 8, comprising an injection molding tool having formed therein a plurality of identical mold cavities (4),
**characterized in**
**that** a plurality of plastifying units (1a; 1b; 1c) are provided, each communicating with different mold cavities of the injection molding tool (4a; 4b).

10. The device according to claim 9, **characterized in that** a plurality of first mold cavities (4a) are provided for shaping basic bodies of an identical geometry and a number of second mold cavities (4b; 4c) corresponding to the number of first mold cavities are provided that are made larger than the first mold cavities (4a).

11. The device according to claim 9 or 10, **characterized in that** different plastifying units (1b; 1c) are assigned to individual ones of the second mold cavities (4b; 4c).

12. The device according to at least one of claims 9 to 11, **characterized in that** there is provided at least one shut-off device (5) by which individual or several mold cavities (4a; 4b) can be brought into flow communication with a plastifying unit (1a; 1b).

13. The device according to claim 12, **characterized in that** different mold cavities can selectively be brought by the shut-off device (5) into flow communication with different plastifying units (1b; 1c) or with a joint plastifying unit (1a; 1b).

14. The device according to claim 12 or 13, **characterized in that** a shut-off device (5) is assigned to mold cavities of an identical design.
